# EUROPEAN PATENT APPLICATION

(11) **EP 4 822 534 A1**
(43) Date of publication of application: **14.10.2026**
(21) Application number: 25169466.7
(22) Date of filing: 09.04.2025
(51) Int. Cl.: G06F 9/54, G05B 19/05

(54) **EXECUTION CUSTOM LOGIC IN AN OPEN PLATFORM COMMUNCATION UNIFED ARCHITECTURE, OPC UA, SERVER**

(71) Applicant: ABB SCHWEIZ AG, 5400 Baden (CH)
(72) Inventor: YUSSUPOV, Vladimir, 68163 Mannheim (DE); KOZIOLEK, Heiko, 76227 Karlsruhe (DE); AMELUNG, Rhaban, 64347 Griesheim (DE); ESKANDANI, Nafise, 64380 Rossdorf (DE); DAWOUD, Abdallah, 66121 Saarbrücken (DE)
(74) Representative: Maiwald GmbH

(57) **Abstract**

The disclosure relates to a computer-implemented method for executing a custom logic in a OPC Unified Architecture, OPC UA, server (20), the method comprises:
- obtaining (S21), by an input interface (1), the custom logic of an OPC UA client (10), wherein the custom logic comprises a custom code and respective metadata, wherein the metadata comprise a definition of inputs and outputs of the custom logic;
- determining (S22), by a code loader unit (2), at least one OPC UA method (M) based on the obtained custom logic;
- invoking (S23), by an invoking unit (3), the at least one OPC UA method (M) for execution by an execution environment (4).

## Description

### FIELD OF THE INVENTION

The invention relates to a method for executing a custom logic in an Open Platform Communication Unified Architecture, OPC UA, server.

### BACKGROUND

Industrial OPC UA-based communication between an OPC UA client and an OPC UA server may rely on OPC UA methods for running custom logic of the OPC UA client in the OPC UA server in certain scenarios, e.g., computation of formulas based on multiple sensor readings, data pre-processing to reduce traffic, and updating complex formulas based on modifications in sensor configurations.

Moreover, existing methods can be tailored to needs of specific OPC UA clients, which can be particularly useful in complex systems where not all devices support the same features or configurations. In this case running custom logic of the OPC UA client in the OPC UA server requires rebuilding OPC UA server and may pose a security risk for sensitive industrial processes and related data.

### SUMMARY

The above problem or need is at least partially solved or alleviated by the subject matters of the independent claims of the present disclosure, wherein further examples are incorporated in the dependent claims.

It is the objective of the invention to load dynamically and execute securely the custom logic of the OPC UA client in the OPC UA server, in particular to execute a custom logic of an OPC UA client within a runtime of the OPC UA server.

This objective is achieved by a method for execution the custom logic of the OPC UA client in the OPC UA server according to a first independent claim. Further advantageous aspects are detailed in the respective dependent claims.

According to a first aspect of the invention a computer-implemented method for executing the custom logic of the OPC UA client in the OPC UA server is provided.

According to this aspect of the invention, by the two main functionalities, namely dynamically loading and securely executing the custom logic in the sandboxed environment a flexibly adjusting existing communication channels implemented with OPC UA servers and clients is provided. In other words, the OPC UA server may need to be adapted without requiring redeployment. The two main functionalities, the dynamic loading and the execution of custom logics eliminates the need to rebuild and restart the OPC UA server for changes to take effect. This can be useful for systems with strict uptime requirements, i.e., to avoid downtimes or interruptions due to server restarts.

A first step of the method comprises obtaining, by an input interface, the custom logic of an OPC UA client, wherein the custom logic comprises a custom code and respective metadata, wherein the metadata comprise a definition of inputs and outputs of the custom logic.

In the first step, a custom logic may be provided to the input interface of the OPC UA server. The custom logic may be provided in a sandbox-compatible format, e.g., WASM module adhering to core WebAssembly specification or WASM component adhering to the WebAssembly component model specification. The custom logic may comprise the custom code and respective metadata, wherein the custom code may comprise an actual code including the related metadata like definition of inputs, outputs and name of to be created OPC UA method.

A second step of the method further comprises determining, by a code loader unit, at least one OPC UA method based on the obtained custom logic.

In the second step, at least one OPC UA method based on the obtained custom logic will be determined by the code loader unit. When implementing an OPC UA method based on custom logic provided by the OPC UA client, the initial step by the code loader unit may involve analyzing the provided code and respective metadata to understand its logic, dependencies, and expected behavior. This may include identifying input parameters, output values, and interactions with external systems. Once the functionality is well-defined, the OPC UA method signature must be established, specifying the necessary input and output arguments in accordance with OPC UA data types. By determining the OPC UA method of the obtained custom logic, dynamically loading and securely executing the custom logic in the OPC UA server may be achieved.

Integration of the custom code into the OPC UA server is then performed by implementing the method within the server application. Typically, this may involve encapsulating the custom code within a function that adheres to the OPC UA method invocation structure. By utilizing an OPC UA SDK such as open62541 (C), UA-.NET Standard (C#), or NodeOPCUA (JavaScript), the method may be registered with the OPC UA server, ensuring its availability for invocation by OPC UA clients. Additionally, appropriate error handling and logging mechanisms must be incorporated to detect failures and provide meaningful responses. The corresponding OPC UA method may be determined based on provided invocation details and a confirmation about the determination status of the method is returned to the code loader unit.

A third step of the method further comprises invoking, by an invoking unit, the at least one OPC UA method for execution by an execution environment. The invoking may comprise an invocation request sent by the OPC UA client to the OPC UA server.

In the third step, firstly, the OPC UA server may receive the invocation request by the OPC UA client. The invocation request may be valid and be processed by the server only if the respective OPC UA method based on the obtained custom logic by the code loader unit has been determined. Various metadata are required to enable invoking the at least one OPC UA method of the custom logic as a part of normal OPC UA server operation.

The invocation step of the OPC UA method may involve a structured communication process between the client and the invoking unit of the server, ensuring the correct execution of the requested operation. When a client invokes an OPC UA method, it must first identify the target node within the server's address space that represents the method. This identification may be achieved through browsing or querying the server for available methods and their associated input/output signatures. The client then may construct a request containing a method's Nodeld along with the required input arguments, formatted according to OPC UA data types. The Nodeld may be a combination of Namespaces and Node Identifiers (NodelDs). The request may be transmitted to the invoking unit of the server using the OPC UA service Call, which is responsible for executing method invocations and returning the results.

Upon receiving the invocation request, the invoking unit of the server may process the input arguments, execute the corresponding method implementation, and generate an appropriate response. If the method completes successfully, the invoking unit may return the specified output arguments along with a status code indicating successful execution. In cases where errors occur-such as invalid input parameters, insufficient permissions, or internal processing failures-the invoking unit may respond with an appropriate status code and diagnostic information.

Open Platform Communication Unified Architecture, OPC UA is an industrial communication protocol designed for secure and reliable data exchange between devices, systems, and applications in an industrial plant. It provides a standardized framework for accessing real-time and historical data, events, and alarms, supporting both client-server and publish-subscribe communication models. In the OPC UA the industrial software applications interact with OPC UA servers to exchange data with automation equipment, e.g., reading temperature and pressure sensor data, or manually operating equipment by communicating output signals to actuators.

OPC UA client may be a software application or device that connects to an OPC UA server to read write and subscribe to data. It sends requests to the server to retrieve real-time values, historical data, or event notifications. Clients may be HMIs, SCADA systems, MES, or custom application that interact with plant devices.

OPC UA server may be a software component that provides structured data access to clients. It may be act as a gateway to underly data sources by exposing data models and methods. The server manages client connections, enforces security policies, and handles requests for reading, writing and event notifications.

Input interface of the OPC UA server may comprise a mechanism through which the server receives data from devices of OPC UA network. The Input interface of the OPC UA server may comprise a direct connection to plant devices like PLCs, sensors or controllers, or communication with other software systems of industrial plant e.g., databases. The Input interface of the OPC UA server may be integrated to the code loader unit of the server.

Custom logic may be an additional software logic implemented within the OPC UA client. The custom code may comprise custom data for processing, business logic for execution or custom methods of non-standard protocols in the OPC UA server.

Metadata may comprise the definition of inputs and outputs of the custom logic. The metadata may be provided with the actual custom code that may comprise at least a definition of
(i) inputs, i.e., which variables and data types are required to call the provided custom logic;
(ii) outputs, i.e., results that may be returned; and
(iii) name of the to-be-created method.

Furthermore, since the provided custom logic may need to be specifically represented in the existing address space of the OPC UA server, the invocation details may also incorporate information such as parent node identifier. Metadata may refer to descriptive information about data, nodes or services within the OPC UA network of the industrial plant wherein the metadata comprise structure, meaning and behaviour of data. Metadata may further comprise node attribute (e.g., name, data type, access rights, description), units of measurement (e.g., temperature in °C, pressure in bar), timestamps (e.g., last update time, source timestamp), event and alarm definitions and/or data model description (e.g., object types and/or variable structure).

For scenarios requiring not only reading and writing data values but also computing formulas based on multiple sensor values or preprocessing data to reduce the network traffic, OPC UA standard may enable executing custom logics by means of OPC UA methods and OPC UA programs. However, changing or updating these executable custom logics requires rebuilding and redeploying OPC UA server implementations. Furthermore, dynamic loading of the executable custom logics poses security risks that must be mitigated.

According to the first aspect, the method may comprise uploading the custom logic of an OPC UA client dynamically within the runtime of an OPC UA server. The custom logic may be uploaded in the server without requiring restarting and redeploying. Furthermore, the execution of the custom logic within the server may be secured. Said functionality, the custom logic uploading may be provided in the server as OPC UA method. In an example, the custom logic uploading may be an extension implemented in the server. Said extension may be integrated to the server based on the standard protocols of OPC UA.

The first aspect of the invention provides an OPC UA server being configured for a dynamic loading of custom logic initiated via requests from OPC UA clients. In other words, an OPC UA client and an OPC UA server are provided for uploading and executing custom logic dynamically within the runtime of server without requiring restarting and redeploying the server. This core functionality i.e., custom logic uploading is provided as OPC UA method calls meaning that extensions are implemented in a standard-compliant manner. Code uploading functionality also incorporates checking the compatibility of the OPC UA address space and persisting the provided custom logic in the OPC UA server, e.g., using a file-based repository. Therefore, specific metadata must be provided alongside the custom code to enable creating and OPC UA method dynamically.

To achieve dynamic loading of custom logics within the runtime of the OPC UA server, the OPC UA server may obtain custom codes with respective metadata and may create OPC UA methods based on the obtained information.

For certain scenarios such as calculation of formulas based on several sensor values, the OPC UA server may enable executing custom logic exposed as OPC UA methods. However, adding new or modifying existing executable custom logics may require rebuilding and redeploying OPC UA server implementations. Moreover, adding executable custom logic dynamically within the runtime may pose a security risk that must be mitigated.

The method may be in particular a computer-implemented method. This means that one, several, or all of the steps of the method may be carried out by a data processing system. A data processing system may be or comprise one or more data processing apparatuses or computers, which may be able to carry out the steps of the method. The data processing system or the one or more computers may generally comprise a processing unit, e.g., a CPU, and a computer program product in the form of a computer-readable storage medium, which may have stored thereon a computer program. The processing unit may be executing instructions stored on that computer program product to execute the steps of the method. The data processing system may further comprise one or more interfaces, e.g., wireless or wired, for data connection to one or more computers or systems of the plant.

Preferably, the method may comprise executing, by the execution environment, the invoked at least one OPC UA method.

In this step the OPC UA method base on the custom logic may be executed in the sandboxed environment and the results may be collected and returned to the OPC UA client. If the execution of the OPC UA method is failed, the invoking unit may be responsible for handling the failure. In this case the invoking unit may process an execution failure message from the sandboxed environment implemented using WASMTIME and send the message to the OPC UA client.

The method may comprise executing the custom logic of the OPC UA client dynamically within the runtime of an OPC UA server. The custom logic may be executed without requiring restarting and redeploying the OPC UA. Furthermore, the execution of the custom logic within the server may be secured. Said functionality, the secure execution of the custom logic, may be provided in the server as OPC UA method. In an example, the secure execution of the custom logic may be an extension implemented in the server. Said extension may be integrated to the server based on the standard protocols of OPC UA.

After the invoking step, the OPC UC the invoked at least one OPC UA based on the custom logic may be executed by the execution environment. This step may be performed only if the OPC UA method based on the obtained custom logic by the code loader unit has been determined.

Once an OPC UA method is invoked, the server may proceed with its execution by validating the received input arguments against the defined method signature. This validation may ensure that the provided parameters match the expected data types and constraints, preventing execution errors due to incorrect input formats. If the input arguments are valid, the execution environment of the server then may execute the associated method.

If the OPC UA method is determined by the code loader unit, the invoking unit may configure the sandboxed execution environment by providing minimal capabilities required for the execution. In an example, the configuration in case of a WebAssembly sandboxed execution environment may comprise access to environment variables or a specific user folder.

Additionally, enabling the execution of such custom logic within the runtime of the OPC UA server may be beneficial in certain cases, e.g., updating complex formulas based on modifications in sensor configurations.

Thorough testing is essential to validate the execution of the method within the OPC UA framework. The method should be evaluated under various conditions, including different input values, boundary cases, and failure scenarios, to ensure robustness. Furthermore, security considerations such as access control and user authentication should be configured to restrict execution to authorized clients. Once these validations are complete, the OPC UA method can be deployed, facilitating seamless interaction within the industrial automation system. By executing the invoked OPC UA method in the execution environment, securely executing the custom logic in the OPC UA server may be achieved.

Preferably, the execution environment of the method may be a sandboxed execution environment.

Moreover, adding executable custom logic dynamically within the runtime may pose a security risk that must be mitigated. To mitigate the security risk of adding custom logic dynamically within the runtime, may the custom logic run in a sandboxed execution environment. Furthermore, the sandbox-based execution environment with minimal to no resource access, e.g., capability-based security, may ensure that the provided custom logic cannot escape the execution environment and affect the running system. The resulting communication channels remain compliant to the OPC UA standard.

A sandbox environment may comprise a controlled, isolated environment where the OPC UA methods and codes can be executed without affecting the rest of the system. The sandbox environment may isolate the execution of the OPC UA methods from the underlying operating system and other software on the system. In an example, the sandbox environment may isolate the execution of the OPC UA methods from the underlying operating OPC UA server and other software on the server. This isolation may prevent potential malicious actions or unintended consequences from affecting the broader system. Furthermore, it may provide a controlled environment where the resources available to the OPC UA methods (like memory, disk space, and network access) are limited and monitored. This may prevent the OPC UA methods from accessing sensitive data or performing unauthorized actions. To run the OPC UA methods in a sandbox environment, typically a virtual machine, VM, or a container technology like Docker may be used.

The sandbox-based execution environment may be provided in the OPC UA server to achieve a secure execution of the custom logic. The sandbox-based execution environment provided in the OPC UA server may be in a portable binary format. In an example, for a secure execution of the custom logic a stack-based virtual machine such as a WebAssembly runtime may be used. The portable binary format of the WebAssembly runtimes may ensure the portability of the provided custom logic and its secure execution as within the runtime of the server only the required capabilities will be provided to it. In an example, the custom logic may be granted access to specific parts of the filesystem if necessary. Such details are provided as metadata at OPC UA method creation time. Execution requests for custom logic are issued also by means of OPC UA method calls, thus also ensuring standard compliance of this mechanism.

By running the custom logic in the sandboxed execution environment with no access to the underlying system resources and strict control of capabilities given to the custom logic the security risks of dynamic loading of custom logics in the OPC UA server may be reduced significant.

The first aspect of the invention may provide an OPC UA server being configured for a secure execution of custom logic initiated via requests from OPC UA clients. In other words, an OPC UA server may be provided being configured to incorporate a sandboxed execution runtime environment for running the uploaded custom code in a portable format. The sandboxed execution runtime environment may comprise a CPU independent configuration being not bounded to a specific CPU architecture. The CPU independent configuration of the runtime may allow flexibly providing CPU-agnostic custom codes written in different programming languages. Said CPU-agnostic custom codes may be executed safely in the sandboxed environment on different hardware platforms of different the OPC UA servers. Specifically, an OPC UA client and an OPC UA server may be provided for uploading and executing custom logic dynamically within the runtime of server without requiring restarting and redeploying the server at the same time ensuring that the execution is secure. To achieve secure execution of the custom code, a sandbox-based execution environment may be provided in the server. In an example the secured sandbox-based execution environment may be implemented as a part of the OPC UA server. The secure sandbox-based execution environment may support running the custom logic in a portable binary format. In other words, the custom logic may be executed independent of the underlying CPU architecture. In an example the runtime may a WebAssembly runtime such as Wasmtime or WasmEdge runtime. In an example a stack-based virtual machine such as a WebAssembly, WASM runtime may be provided in the server. Portable binary format of the WASM runtime may ensure the portability of the provided custom logic. Portable binary format of the WASM runtime may ensure secure execution of the custom logic since only the required capabilities will be provided to it within the runtime.

Furthermore, to ensure the standards-based communication, the interaction with other extensions may be achieved using standard OPC UA mechanisms such as OPC UA method calls. Due to the portable binary format supported by the sandbox-based execution environment, the provided custom logic may be implemented in a variety of programming languages. The implementation of the custom logic in different programming language may simplify the general workflow for different OPC UA clients. Moreover, due to the portability of the custom language implementations, the same mechanisms may be used for different deployment environments, e.g., edge and embedded deployments.

In an example, for a custom logic may be an access to specific parts of the filesystem provided. Such details may be provided as metadata at OPC UA method creation time. Execution requests for custom code may be issued also by means of OPC UA method calls, thus also ensuring standard compliance of this mechanism. By executing the invoked OPC UA method in the sandboxed execution environment, securely executing the custom logic in the OPC UA server may be achieved.

Preferably, the executing the invoked at least one OPC UA method may comprise determining, by the execution environment, a OPC UA client related security status of a result of the execution of the invoked at least one OPC UA method.

After the execution of the invoked at least one OPC UA method, the execution environment may determine the OPC UA client related security status of the execution of the method.

The OPC UA client related security status may rely on various security measures such as virtualization, access controls, resource limitations, and monitoring of OPC UA server calls. These measures may ensure that even if the OPC UA method within the execution environment is compromised, it cannot affect the host OPC UA server or other applications. The virtualization may comprise utilizing virtual machines to create isolated environments for running OPC UA methods and applications. The access control may comprise implementing strict access controls to limit what the execution environment can interact with, such as specific OPC UA servers or data sources. The resource limitations may comprise setting limits on memory usage, CPU cycles, and network access to prevent excessive resource consumption or unauthorized communication. The monitoring may comprise implementing monitoring tools to oversee the behavior of the sandboxed environment and execution of OPC UA methods, detecting any unusual activities or attempts to breach security.

Furthermore, the execution of OPC UA methods may be influenced by security policies and access control mechanisms. Depending on sensitivity of the method, the server may enforce user authentication and role-based access control before proceeding with execution allowing for proactive threat detection and mitigation. Additionally, logging and monitoring mechanisms can be implemented to track method invocations and the result of the execution. These measures ensure that method execution is performed securely, efficiently, and in compliance with industrial automation requirements.

After the execution of said OPC UA method, the execution environment may assess whether the result contains sensitive or critical information that requires protection. This assessment may include evaluating the result of the execution against predefined security policies, checking for exposure of confidential data, and ensuring that the result adheres to access control restrictions. If the result of the execution outputs data that is classified as restricted or confidential, additional security measures such as encryption, role-based access control, or masking techniques may be required before transmitting the result to the OPC UA client.

In an example the result of the execution raises security concerns-such as unauthorized access attempts, anomalous data patterns, or policy violations-the execution environment may generate alerts, restrict result visibility, or enforce additional authentication steps. Additionally, secure communication channels using encryption and digital signatures may help preventing unauthorized access and data tampering during method execution.

In an example, OPC UA security mode settings, including message signing and encryption, helps prevent eavesdropping, data manipulation, or replay attacks may be used.

Security considerations may apply to the invoking the method as well, as unauthorized invoking of certain methods could lead to system vulnerabilities. OPC UA server may provide authentication and access control mechanisms to restrict invoking the method based on user roles and privileges.

By determining the OPC UA client related security status of a result of the execution, by the execution environment, securely executing the custom logic in the OPC UA server, secure access control, and trusted communication between OPC UA server and OPC UA client may be achieved. Furthermore, a flexibly adjusting existing communication channels implemented with the OPC UA servers may be achieved.

Preferably, determining the at least one OPC UA method may comprise performing, by an address space checking unit, an address check compatibility of the custom logic within an OPC UA server address space. Furthermore, a compatibility status of the custom logic may be sent to the code loader unit.

When implementing an OPC UA method based on custom logic provided by the OPC UA client, the initial step by the code loader unit may involve analyzing the provided code and respective metadata to understand its logic, dependencies, and expected behavior. This may include identifying input parameters, output values, and interactions with external systems. Once the functionality is well-defined, the OPC UA method signature must be established, specifying the necessary input and output arguments in accordance with OPC UA data types.

To access specific variables in the OPC UA server address space, the provided custom logic must either make assumptions on how the address space is organized, or operate on standard address space models, such as OPC UA for devices. However, since the address space may be incompatible with the provided custom logic, e.g., due to specific values being not available, the address check compatibility of the custom logic is performed using the address space checking unit. The results of the verification are then reported back to the code loader unit and, in case the address space is compatible, the process may proceed further.

Since the custom logic may rely on specific data located in the OPC UA server address space, the address space is checked using the address space checking unit before proceeding with determining the corresponding invocable OPC UA method.

The first core functionality of the invention, uploading the custom logic may also incorporate checking the compatibility of the OPC UA address space and persisting the provided custom logic in the OPC UA server, e.g., using a file-based repository. Therefore, specific metadata must be provided alongside the custom code to enable creating and OPC UA method dynamically.

Performing an address check compatibility of the custom logic within an OPC UA server address space may be performed to ensure proper function of the custom logic within the OPC UA server. An address space checking unit may be provided verifying that the custom logic correctly references and interacts with existing nodes in the server's address space. This process may involve checking whether the namespaces and node identifiers used in the custom logic align with the defined namespace structure and node identifiers, ensuring that all referenced objects, variables, and methods exist and conform to OPC UA specifications. Any mismatches, such as invalid or non-existent the namespaces and node identifiers, incorrect data type associations, or namespace conflicts, must be identified and resolved before deployment. One specification of the metadata of the custom logic may be a list of required values in the address space the custom logic relies on, which may be used to check the compatibility of the custom logic implementation with the state of the address space before creating the OPC UA method.

The address space checking unit may assess an access control policies and security constraints to ensure that the custom logic does not interact with unauthorized nodes. Additionally, consistency checks may be performed to validate relationships between nodes, ensuring that object hierarchies, references, and dependencies are maintained correctly.

Once compatibility is confirmed, the address space checking unit may generate a compliance report, confirming successful compatibility of the custom logic within the server address space or highlighting potential issues.

If errors or conflicts are detected, recommendations for corrective actions may be provided, such as adjusting the namespaces and node identifiers used in the custom logic, modifying access control settings, or restructuring parts of the address space.

By performing the address check compatibility of the custom logic within the OPC UA server address space by the address space checking unit, the risk of runtime errors, unauthorized access, and inconsistent data interactions may be significant reduced.

Preferably, determining the at least one OPC UA method may comprise storing the custom logic in a data registry unit.

The provided custom logic may be needed to be invoked more than once. Thus, the provided custom logic may be stored in the data registry unit. The data registry unit may, for instance, be implemented as a part of the OPC UA server, e.g., using a filesystem, an embedded object storage, or an in-memory database for cases when long-term persistence is not necessary. Another option may be to rely on a remote data registry available via network calls. For example, in case WebAssembly is used, a data registry relying on warg protocol may be incorporated. The stored custom logic may comprise the custom code and the metadata. The metadata accompanying the custom logic may be stored to enable creation of the corresponding OPC UA method.

The stored custom logic in the data registry unit may be used in a subsequent invoking and execution and to prevent redundant determining and creation of the same method of the custom logic.

In case the provided custom logic is stored in the data registry unit, OPC UA server may prepare, e.g., load WASM binaries in memory, all such uploaded custom logic at startup to speed up future invocations.

By storing the custom logic in the data registry unit, the respective methods may be efficiently retrieved, avoiding the need to redetermining and recreation the methods multiple times.

Preferably, the custom code may be in a portable binary format. The portable binary format of the custom code may refer that the custom code is compiled into a machine-readable binary form that can be executed across different platforms without requiring modification or recompilation. The portable binary format may allow execution of the custom code on multiple environments with minimal compatibility issues. This is achieved through WebAssembly, WASM, Java bytecode, or LLVM bitcode. These formats enable custom code to be executed across different platforms.

In an example of portable binary custom code the WebAssembly, WASM may be used for executing custom code within an OPC UA server. For instance, an automation engineer could develop a temperature analysis algorithm in C++, compile it into WASM, and deploy it on the OPC UA server with WASM runtime support. In another example may be Java bytecode used, which runs on any Java Virtual Machine, JVM, or containerized applications, ensuring that the custom code remains portable and easy to deploy across various OPC UA implementations.

Th portable binary format of the custom code may allow the custom code to be executed on different operating systems and hardware architectures without requiring modifications. Preferably, the custom code may be provided in the portable binary format by the OPC UA client. The custom code may need to be executed across different OPC UA servers with different CPU-Architectures. To achieve this portability, OPC UA client may provide custom code in a portable binary format.

OPC UA client may provide a portable binary format for the custom code through several mechanisms, ensuring cross-platform compatibility. One approach may be use of WebAssembly, WASM, a lightweight, sandboxed binary format that allows custom code to run securely within the OPC UA server environment. WASM may enable developers to write the custom code in languages such as C, C++, or Rust, compile it into a portable binary, and execute it within the server without modification.

The portable binary format may ensure that the custom code may be executed on various OPC UA servers without compatibility issues. Furthermore, the portability of the custom code may provide a compatibility of the custom code within different OPC UA server address space of different OPC UA servers, and this may ensure that the custom code remains platform-independent while maintaining performance and security.

Preferably, determining the at least one OPC UA method may comprise compiling, by the code loader unit, the custom code into the portable binary format. The code loader unit of the OPC UA server may convert the custom code into the portable format. In other words, if the obtained custom code from the OPC UA client is not in the portable binary format, the code loader unit of OPC UA server may convert it into the portable binary format. The code loader unit may be Just-In-Time, JIT compiler or an interpreter to process and compile the provided custom code into a portable binary format like WebAssembly, WASM, Java bytecode, or LLVM bitcode. For example, the code loader unit may obtain custom code in form custom scripts in Python, JavaScript, or Lua, compile them into an intermediate portable binary format. In another example, the code loader unit may convert the provided custom code from C or C++ into WASM.

Converting the custom code into the portable binary format may ensure that the custom code may be executed on various OPC UA servers without compatibility issues. Furthermore, the portability of the custom code may provide a compatibility of the custom code within different OPC UA server address space of different OPC UA servers, and this may ensure that the custom code remains platform-independent while maintaining performance and security.

Preferably, invoking the at least one OPC UA method may comprise configuring, by the invoking unit, the execution environment by providing minimal capabilities required for the execution. In case the invoked OPC UA method exists, the invoking unit may configure the sandboxed execution environment by providing minimal capabilities required for the execution. In an example WebAssembly, WASM configuration might include allowing access to environment variables or a specific user folder. Finally, the custom logic is executed in the sandboxed environment and the results are collected and returned to the client. In case a failure happens when executing the method, the invoking unit is responsible for handling the failure, e.g., processing the failure message from the sandboxed environment implemented using WASMTIME.

By configuring the execution environment by providing minimal capabilities required for the execution enhanced security, and fewer execution failures may be achieved.

Preferably, the method may be performed within runtime of the OPC UA server.

The execution of custom code in the OPC UA server may perform dynamically within the runtime. The custom codes provided in the portable binary format e.g. WebAssembly, WASM, or interpreted scripts, may be executed within the server's runtime. In addition, the execution environment may be arranged within the runtime of the server. The system may depend on runtime conditions, such as the presence of a new device or changes in system configuration.

Preferably, the metadata may comprise a method signature, a method name, a description of the custom logic, a parent node identifier, required values in an OPC UA server address space, usernames that are allowed to invoke the custom logic and/or required capabilities of the execution environment.

The metadata may be provided for the code loader unit to enable flexibly using the custom logic. The metadata are comprising:
- Method signature:
   Method signature is required to be specified and includes the definition of zero or more input parameters with corresponding data types as well as the returned output parameters (if any) and respective data types.
- Method name:
   Method name is required to be provided to uniquely identify the custom logic as an OPC UA method in the address space.
- Description
   Description is an optional string describing the custom logic.
- Parent node identifier.
   Parent node identifier may be specified to reference a specific node in the address space to predefine the location of the OPC UA method.
- List of required values:
   List of required values in the address space the custom logic relies on, which can be used to check the compatibility of the custom logic implementation with the state of the address space before creating the OPC UA method.
- List of usernames:
   List of usernames that are allowed to invoke the provided custom logic in cases when the client authentication is enforced by forbidding the anonymous access to the server,
- List of required capabilities:
   List of required capabilities that must be granted within the sandbox to run the custom logic, e.g., access to specific folders or environment variables.

The first aspect of the invention may address these issues by introducing a method and a system for the dynamic loading of the custom logics initiated via requests from the OPC UA clients and executing it in the sandboxed execution environment of the OPC UA server. Furthermore, since the OPC UA servers may be hosted on different deployment targets, the provided custom logic should be compatible with varying CPU architectures. The custom logic is provided in a portable format that is not bound to specific CPU architectures, hence reducing an overhead for rebuilding the custom logic for different deployment targets on which OPC UA servers can run. As a result, this invention enables flexible, on-demand adjustments of existing communication channels implemented with OPC UA servers within the runtime without having to redeploy them.

According to a second aspect of this disclosure, there is provided an OPC UA server, comprising means for carrying out the method in accordance with the first aspect of this disclosure.

According to a third aspect of this disclosure, there is provided a computer program, comprising instructions which, when the program is executed by a computer, cause the computer to carry out the method in accordance with the first aspect of this disclosure.

The computer program product may be a computer program or computer programs as such, meaning a computer program consisting of or comprising program code to be executed by the data processing apparatus, in particular computer. Alternatively, the computer program product may be a product such as a data storage, in particular computer-readable data storage medium, on which the computer program may be temporarily or permanently stored. According to the third aspect of this disclosure, there may be provided a data processing system configured to carry out the method according to the first aspect of this disclosure.

For example, the data processing system may comprise the computer program product or at least be connected to it such that it may execute the instructions of the computer program.

According to a fourth aspect of this disclosure, there is provided a computer-readable data carrier having stored thereon the computer program of the third aspect of this disclosure.

It is noted that the above aspects, examples and features may be combined with each other irrespective of the aspect involved.

The above and other aspects of the present disclosure will become apparent from and elucidated with reference to the examples described hereinafter.

### BRIEF DESCRIPTION OF THE DRAWINGS

In the following, the invention is illustrated using Figures without any intention to limit the scope of the invention. The Figures show:
Fig. 1: shows a schematic representation of an OPC UA client and an OPC UA server according to the first aspect of the invention;
Fig. 2: shows a flow chart of a method for executing a custom logic in an OPC UA server;
Fig. 3: shows a flow chart of a method for custom logic uploading workflow;
Fig. 4: shows a flow chart of a method for custom logic invocation workflow.

The Figures are schematic only and not true to scale. In principle, identical or like parts, elements and/or steps are provided with identical or like reference numerals in the Figures.

### DETAILED DESCRIPTION OF THE INVENTION

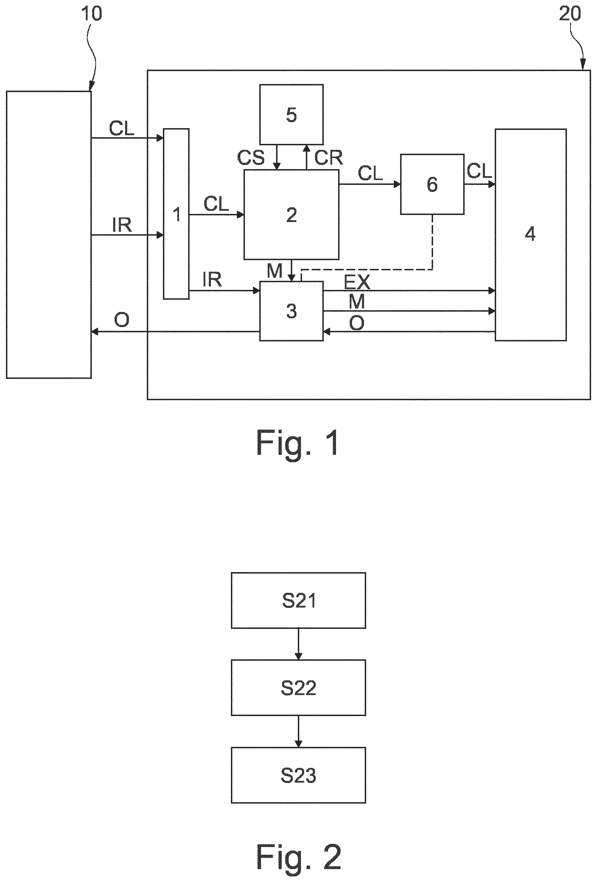

Figure 1 shows a schematic representation of an OPC UA client and an OPC UA server according to the first aspect of the invention.

The system comprises an OPC UA client 10 and an OPC UA server 20. The OPC UA server 20 comprises an input interface 1, a code loader unit 2, an invoking unit 3, an execution environment 4, an address space checking unit 5, and a data registry unit 6. The OPC UA client 10 sends custom logic CL to the OPC UA server 20. The provided custom logic CL is received by the input interface 1 of the OPC UA server 20. The OPC UA client 10 can upload custom logic CL by utilizing a code loader functionality exposed using the standard OPC UA method M invocation mechanism. The upload process involves providing the custom logic CL to be executed, along with specifications of various metadata required for invoking the custom logic CL, e.g., which inputs are required and what outputs (if any) are returned in response.

In other words, the custom logic CL comprises custom code and respective metadata. The metadata define the inputs and outputs of the custom logic CL. The custom code is in a portable binary format. The custom logic CL comprises business logic.

The code loader unit 2 receives the custom logic CL from the input interface, 1. First compatibility of the custom logic CL with OPC UA server address space will be checked. Therefore, the code loader unit 2 sends the address space checking unit 5 a request CR. The address space checking unit 5 performs an address compatibility check of the custom logic CL within the OPC UA server address space and sends the code loader unit 2 a compatibility status CS of the custom logic CL.

If the custom logic CL is compatible with the OPC UA server address space, the custom logic CL will be stored in the data registry unit 6. In other words, the obtained custom logic CL becomes available as part of the data registry unit 6 and can be invoked. Furthermore, the code loader unit create a UPC UA method M based on the obtained custom logic CL and send it to the invoking unit 3.

The OPC UA client 10 sends an invoking request IR to the input interface 1 of the OPC UA server 20. The invoking request IR will be forwarded to the invoking unit 3. The invoking unit 3 checks first whether the OPC UA method M of the obtained custom logic CL is already created. The invoking unit 3 invokes the available OPC UA method M and sends the available OPC UA method M and an execution request EX to the execution environment 4.

The execution environment 4 receives the OPC UA method M and an execution request EX and executes the custom logic CL. The execution environment 4 can be a sandboxed execution environment. Additionally, the execution environment 4 determines the OPC UA client-related security status of the result of execution.

The execution environment 4 sends an output O to the invoking unit 3. The output O of the execution environment 4 comprises status of execution, result of execution and the OPC UA client-related security status. Finally, the invoking unit 3 sends the output O to the OPC UA client 10.

In an example, the custom logic CL is used for aggregating or filtering sensor data that can be dynamically uploaded by the OPC UA client 10 and securely executed in a sandboxed execution environment 4. This reduces the amount of data sent from the OPC UA server 20 to the OPC UA client 10 without requiring recompilation or redeployment of the OPC UA server 20. Since the custom logic CL relies on specific data located in the OPC UA server address space, the address space is checked using the address space checking unit 5 before proceeding with the creation of the corresponding invocable OPC UA method M. Once verified, the obtained custom logic CL can be executed using standard OPC UA method M invocation mechanisms. The actual execution is orchestrated by the invoking unit 3, which communicates with the sandboxed execution environment 4, responsible for loading and securely executing the provided custom logic CL.

A preferable sandboxed runtime environment within the OPC UA server 20 is a WebAssembly, WASM runtime capable of securely running the provided custom logic CL, such as WASMTIME or WasmEdge runtimes. In one example, the sandboxed execution environment 4 is a WASM runtime, meaning the provided custom logic CL is compiled into a portable WASM binary format. The compilation of the custom logic CL into the portable WASM binary format occurs either before or as part of the obtaining step. However, other sandboxed runtime environments and corresponding portable binary formats are also conceivable.

In another example, an open-source OPC UA server 20 (e.g., open62541) and an OPC UA client 10 (e.g., open62541) are used for dynamically loading and securely executing custom logic CL to adjust temperature setpoints. A WebAssembly runtime, such as WASMTIME, is used in the OPC UA server 20 as the sandboxed execution environment 4 for securely running the obtained custom logic CL. In this case, the custom logic CL is provided as WASM binaries and stored in the data registry unit 6, which is implemented as a filesystem-based repository.

This example focuses on enabling different OPC UA clients 10 in the system to update temperature settings dynamically, which is useful in cases where the temperature setpoint is not fixed or known in advance. For example, the number of temperature controllers or access control requirements may change, such as which users or groups of users can adjust controllers. Therefore, a method for dynamically adjusting temperature based on the runtime system state enhances the overall flexibility of the solution.

An example implementation of such custom logic CL is shown in Listing 1.

**In an example implementation of temperature setpoint adjustment in open62541:**

```
       // Define the input arguments for the AdjustTemperatureSetpoint method
       UaArgument inputArg;
       inputArg.setName("newSetpoint");
       inputArg.setDescription("The new temperature setpoint to apply.");
       inputArg.setDataType(UaNodeId::fromString("i=11")); // Double data type (i=11) in OPC UA
       // Define the output argument (optional)
       UaArgument outputArg;
       outputArg.setName("status");
       outputArg.setDescription("Status of the operation.");
       outputArg.setDataType(UaNodeId::fromString("i=12")); // String data type (i=12) in OPC
       UA
       // Create a dynamic method (runtime creation)
       UaMethod* adjustTempMethod = new UaMethod();
       // Set the method's name and description
       adjustTempMethod->setBrowseName("AdjustTemperatureSetpoint");
       adjustTempMethod->setDescription("Adjusts the temperature setpoint for a given
       controller.");
       // Add input and output arguments to the method
       adjustTempMethod->addArgument(inputArg);
       adjustTempMethod->addArgument(outputArg);
       // Add the method to the Node so that it is available to clients at runtime
       parentNode->addMethod(adjustTempMethod);
```

Clearly, the example discussed is not the only possibility for employing the proposed concepts but more application scenarios like sensor fusion, filtering out-of-bound values, mapping parts of the address space to a particular format and security or validity checks on the server before sending the data to clients.

The sensor fusion helps processing and integrating raw data from multiple sensors (e.g., from temperature, pressure, or motion sensors) to obtain more accurate and insightful information. Having sensor fusion logic dynamically exposed as a callable OPC UA method M allows external OPC UA clients 10 to flexibly request the fusion of sensor data. Some of the benefits of the sensor fusion are adaptability to change, real-time processing, customizability and scalability.

Dynamic creation and execution allow adjusting the fusion process based on emerging changing sensor configurations, faults, or environmental conditions without requiring system downtime or reconfiguration. If a sensor is added, removed, or fails, the fusion logic can be modified or recalibrated within the runtime to accommodate these changes.

Sensor data can be processed upon arrival leading to faster decision-making, which is particularly helpful in domains like robotics, autonomous vehicles, or industrial automation.

Furthermore, sensor fusion algorithms can be modified on the fly without disrupting the entire system. This can also be valuable for testing new algorithms, adjusting to emerging operation conditions, or optimizing the fusion logic for scenarios such as energy efficiency or error mitigation.

As more sensors are added to the system, dynamic sensor fusion within the runtime facilitates scaling. Instead of hardcoded sensor integration, the system can flexibly integrate new data sources as they become available.

Filtering out-of-bound values involves real-time filtering of data points outside of acceptable or predefined ranges before they are processed or sent to other systems, e.g., erroneous temperature readings. For cases when data are collected at high frequency, out-of-bound values can clutter the system. A dynamically runnable filtering method can be utilized to automatically discard such readings, reducing the volume of data that needs to be stored, analyzed, or transmitted.

OPC UA systems can comprise complex hierarchical arrangements of various data types and devices with different communication protocols. The custom logic CL could dynamically map parts of the address space into pre-specified structures or into to a particular format, e.g., according to a standardized hierarchy from a standardized OPC UA companion specification. This can even enable the retrofitting existing OPC UA servers 20 for the newly evolving OPC UA companion specifications, for which the OPC UA server 20 was not initially built for. The OPC UA client 10 can then use the custom logic CL via a describe mechanism to extract information from the OPC UA server address space and compose into a structure according to the standardized companion specification, before sending it to the OPC UA clients 10.

Additional security or validity checks on the OPC UA server 20 can be implemented on-the-fly before transmitting data to OPC UA clients 10, e.g., to ensure that only authorized users can access or modify sensitive data, to validate data integrity, correct formatting, or even cryptographic validation. The OPC UA server 20 can also enforce context-specific security measures, e.g., checks for sensitive data or for requests coming from certain clients or user roles.

Fig. 2 shows a flowchart of a method for executing custom logic CL in an OPC UA server 20.

The first step S21 involves sending custom logic CL by an OPC UA client 10 to an input interface 1 of an OPC UA server 20. The OPC UA client 10 can upload custom logic CL by utilizing a code loader functionality exposed using the standard OPC UA method M invocation mechanism. The upload process incorporates providing the to-be-executed custom logic CL as well as specifying various metadata required for invoking the custom logic CL, e.g., which inputs are required and what outputs (if any) are returned in response. In other words, the custom logic CL comprises custom code and respective metadata. The metadata define the inputs and outputs of the custom logic CL. The custom code is in a portable binary format. The custom logic CL comprises business logic.

In the next step S22 an address space checking unit 5 performs an address compatibility check for the custom logic CL within an OPC UA server address space. Furthermore, the custom logic CL will be stored in a data registry unit 6. In other words, the uploaded custom logic CL becomes available as part of the data registry unit 6 and can be invoked. Finally, the code loader unit 2 of the server 20 determines at least one OPC UA method M based on the obtained custom logic CL.

In the next step S23 the invoking unit 3 of the server 20 invokes at least one OPC UA method M for execution by the execution environment 4.

Step S23 may involve executing the invoked OPC UA method(s) M within the execution environment 4 of the server 20, wherein the execution environment 4 is a sandboxed execution environment. Additionally, the execution environment 4 determines the OPC UA client-related security status of the result of executing the invoked OPC UA method(s) M.

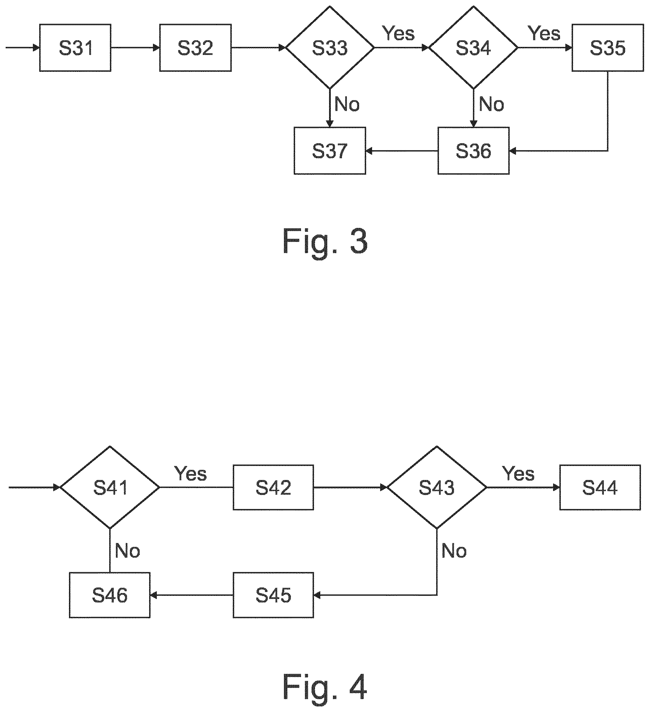

The code loading algorithm and invoking algorithm are implemented using predefined OPC UA methods M that follow the workflows shown in Figures 3 and 4, respectively.

Fig. 3 shows a workflow for uploading custom logic CL using the code loader unit 2 and its respective implementation in the OPC UA server 20. This procedure is executed whenever custom logic CL needs to be made available for invocation.

In step S31, the custom logic CL is provided in a sandbox-compatible format, e.g., a WASM module adhering to the core WebAssembly specification or a WASM component adhering to the WebAssembly component model specification. Additionally, the metadata are provided together with the custom code within the custom logic CL, which comprises at least a definition of inputs, outputs, and the name of the OPC UA method M to be defined. The definition of inputs comprises variables and data types required to call the provided custom logic CL. The definition of outputs comprises the results that may be returned. Furthermore, since the provided custom logic CL may need to be specifically represented in the existing address space of the OPC UA server 20, the invocation details may also incorporate information such as a parent node identifier.

To access specific variables in the address space of the OPC UA server 20, the provided custom logic CL must either make assumptions about how the address space is organized or operate on standard address space models, such as OPC UA for devices. However, since the address space may be incompatible with the provided custom logic CL, e.g., due to specific values not being available, an address space compatibility check is performed in step S32 using the address space checking unit 5. The results of the verification are then reported back to the code loader unit 2. If the address space is compatible with the provided custom logic CL, the process can proceed in step S33; otherwise, a failure status regarding the creation of the OPC UA method M is returned to the OPC UA client 10 in step S37.

If the address space is compatible with the provided custom logic CL, it is checked in step S34 whether the custom logic CL should be stored. If the address space is compatible and the custom logic CL is intended to be invoked more than once, it is stored in the data registry unit 6 in step S35. The data registry unit 6 could, for instance, be implemented as a part of the OPC UA server 20, using the filesystem, an embedded object storage, or an in-memory database for cases where long-term persistence is not necessary. Another option is to rely on a remote registry available via network calls. For example, if WebAssembly is used, a data registry unit 6 based on the warg protocol can be incorporated. The metadata accompanying the custom logic CL also need to be stored to enable the creation of the corresponding OPC UA method M. The OPC UA method M based on the stored custom logic CL will be created in step S36.

If the address space is compatible with the provided custom logic CL but the custom logic CL is not intended to be invoked more than once, the OPC UA method M based on the provided custom logic CL will be created in step S36 without the need to store the custom logic CL in the data registry unit 6.

The corresponding OPC UA method M is created based on the provided invocation details in step S36, and a confirmation status regarding the creation of the OPC UA method M is returned to the OPC UA client 10 in step S37.

Fig. 4 shows a flowchart of a method for the custom logic CL invocation workflow. Fig. 4 depicts the workflow for invoking custom logic CL instantiated using the standard OPC UA method M invocation mechanism.

In step S41, it is checked whether the OPC UA method M of the custom logic CL has been created. An invocation request is valid and can be processed only if it references an existing OPC UA method M created in the custom logic CL uploading workflow (Fig. 3).

If the OPC UA method M of the custom logic CL has been created, in step S42, the custom logic CL is executed in the sandboxed execution environment 4. If custom logic CL was previously provided and is stored in the data registry unit 6, the OPC UA server can also prepare, e.g., load WASM binaries into memory, all such uploaded custom logic CL at startup to speed up future invocations. If the referenced OPC UA method M exists, the invoking unit 3 may configure the sandboxed execution environment 4 by providing minimal capabilities required for execution. For example, in the case of WebAssembly configuration, the minimal capabilities might include allowing access to environment variables or a specific user folder.

In step S44, if the custom logic CL is executed successfully in the sandboxed execution environment, the results are collected and returned to the OPC UA client 10.

In step S45, if a failure occurs during execution of the OPC UA method M, the invoking unit 3 is responsible for handling the failure, e.g., processing the failure message from the sandboxed execution environment 4, which is implemented using WASMTIME.

In step 46, a failure status regarding the execution of the OPC UA method M is returned to the OPC UA client 10. Additionally, if the OPC UA method M of the custom logic CL does not exist, a status regarding the execution of the OPC UA method M is returned.

During execution, the OPC UA server 20 must handle potential exceptions and failures, ensuring that any issues-such as communication failures, resource constraints, or invalid operations-are properly managed. OPC UA provides structured status codes and diagnostic messages to inform the client about execution outcomes. If the method M completes successfully, the OPC UA server 20 generates the appropriate output arguments and transmits them back to the OPC UA client 10 along with a success status code. In case of an error, detailed diagnostic information is provided, allowing the OPC UA client 10 to take corrective actions.

As used herein, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Further, as used herein, the phrase "at least one" or similar, e.g., "one or more of", in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that such entities may optionally be present other than the entities specifically identified within the list of entities to which the phrase "at least one" or similar refers, whether related or unrelated to those entities specifically identified. Thus, as a non-limiting example, "at least one of A and B" (or, equivalently, "at least one of A or B" or, equivalently "at least one of A and/or B" or, equivalently "one or more of A and B", "one or more of A or B", or "one or more of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

As used herein, the phrase "being indicative of" may for example mean "reflecting" and/or "comprising". Accordingly, an entity, element and/or step referred to herein as "being indicative of [...]" can be synonymously or interchangeably used herein with one, two or all of said entity, element and/or step "comprising [...]" and said entity, element and/or step "reflecting [...]". Further, as used herein, phrases such as "based on", "related" or "relating", "associated" and similar are not to be seen exclusively in terms of the entities, elements and/or steps to which they are referring, unless otherwise stated. Instead, these phrases are to be understood inclusively, unless otherwise stated, in that, for example, an entity, element or step referring by any of these phrases or similar, e.g., being "based on", an or another entity, element or step, does not exclude that the respective entity, element or step may be further or also "based on" any other entity, element or step than the one to which it refers.

The designation of methods, steps and other features such as executing a custom logic CL in a OPC UA server 20 as provided herein is merely intended to make the methods and their steps referenceable and distinguishable from one another. By no means does the designation of methods and steps constitute a limitation of the scope of this disclosure. For example, when this disclosure describes a third step of a method, a first or second step of the method do not need to be present yet alone be performed before the third step unless they are explicitly referred to as being required per se or before the third step. Moreover, the presentation of methods or steps in a certain order is merely intended to facilitate one example of this disclosure and by no means constitutes a limitation of the scope of this disclosure. Generally, unless no explicitly required order is being mentioned, the methods and steps may be carried out in any feasible order. Specifically, the terms first, second, third or (a), (b), (c) and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Any reference signs in the claims should not be construed as limiting the scope.

### List of reference signs

- 1: Input interface
- 2: Code loader unit
- 3: Invoking unit
- 4: Execution environment
- 5: Address space checking unit
- 6: Data registry unit
- 10: OPC UA client
- 20: OPC UA server
- CL: Custom logic
- CR: compatibility check request
- CS: compatibility status
- EX: Execution request
- IR: invoking request
- M: OPC UA method
- O: Output
- S21-S23: Steps
- S31-S37: Steps
- S41-S46: Steps

## Claims

1. A computer-implemented method for executing a custom logic (CL) in a OPC Unified Architecture, OPC UA, server (20), the method comprises:
- obtaining (S21), by an input interface (1), the custom logic (CL) of an OPC UA client (10), wherein the custom logic (CL) comprises a custom code and respective metadata, wherein the metadata comprise a definition of inputs and outputs of the custom logic (CL);
- determining (S22), by a code loader unit (2), at least one OPC UA method (M) based on the obtained custom logic (CL);
- invoking (S23), by an invoking unit (3), the at least one OPC UA method (M) for execution by an execution environment (4).

2. The method of claim 1,
wherein the method comprises:
- executing, by the execution environment (4), the invoked at least one OPC UA method (M).

3. The method of any one of the preceding claims,
wherein the execution environment (4) is a sandboxed execution environment.

4. The method of any one of the preceding claims,
wherein the executing the invoked at least one OPC UA method (M) comprises:
- determining, by the execution environment (4), a OPC UA client related security status of a result of the execution of the invoked at least one OPC UA method (M).

5. The method of any one of the preceding claims,
wherein determining (S22) the at least one OPC UA method (M) comprises:
- performing, by an address space checking unit (5), an address check compatibility of the custom logic (CL) within an OPC UA server address space.

6. The method of any one of the preceding claims,
wherein determining (S22) the at least one OPC UA method (M) comprises storing the custom logic (CL) in a data registry unit (6).

7. The method of any one of the preceding claims,
wherein the custom code is in a portable binary format.

8. The method of claim 7,
wherein the custom code is provided in the portable binary format by the OPC UA client (10).

9. The method of claim 7,
wherein determining (S22) the at least one OPC UA method (M) comprises:
- compiling, by the code loader unit (2), the custom code into the portable binary format.

10. The method of any one of the preceding claims,
wherein invoking (S23) the at least one OPC UA method (M) comprises:
- configuring, by the invoking unit (3), the execution environment (4) by providing minimal capabilities required for the execution.

11. The method of any one of the preceding claims,
wherein the method (M) is performed within runtime of the OPC UA server (20).

12. The method of any one of the preceding claims,
wherein the metadata comprises a method signature, a method name, a description of the custom logic, a parent node identifier, required values in an OPC UA server address space, usernames that are allowed to invoke the custom logic (CL) and/or required capabilities of the execution environment (4).

13. A OPC UA server (20), comprising means for carrying out the method of claims 1 to 12.

14. A computer program, comprising instructions which, when the program is executed by a computer, cause the computer to carry out the method of claims 1 to 12.

15. A computer-readable data carrier having stored thereon the computer program of claim 14.
